# EUROPÄISCHE PATENTSCHRIFT

(11) **EP 1 610 095 B1**
(45) Veröffentlichungstag und Bekanntmachung des Hinweises auf die Patenterteilung: **10.08.2016**
(21) Anmeldenummer: 04014496.6
(22) Anmeldetag: 21.06.2004
(51) Int. Cl.: G01D 5/14, G01D 5/16, G01D 5/251

(54) **Drehgeber zur Bestimmung des absoluten Drehwinkels einer Welle**
Rotation detector for determining the absolute angular position of a shaft
Capteur de rotation pour déterminer la position angulaire absolue d'un arbre

(43) Veröffentlichungstag der Anmeldung: 28.12.2005
(73) Patentinhaber: Baumer Electric AG, 8501 Frauenfeld (CH)
(72) Erfinder: Burgermeister, Andreas, 8594 Güttingen (CH); Hohl, Michael, 8405 Winterthur (CH); Schoch, Simon, 8400 Winterthur (CH); Schneider, Michael, 78462 Konstanz (DE)
(74) Vertreter: Strauss, Steffen

(56) Entgegenhaltungen:
- EP-A- 0 534 055
- EP-A- 1 243 891
- DE-A- 4 440 214
- DE-A- 10 213 381
- US-A1- 2002 021 124

## Beschreibung

### Gebiet der Erfindung

Die Erfindung betrifft einen Drehgeber zur Bestimmung des absoluten Drehwinkels einer um eine Drehachse drehbaren Welle in Bezug auf eine Ausgangswinkellage der Welle, umfassend eine erste Magnetfelddetektionseinrichtung zur Bestimmung der Anzahl der Umdrehungen der Welle in Bezug auf die Ausgangswinkellage der Welle, und eine zweite Magnetfelddetektionseinrichtung zur Bestimmung des relativen Drehwinkels der Welle in Bezug auf die Ausgangswinkellage.

### Stand der Technik

Drehgeber zur Bestimmung von Winkelpositionen durch berührungslose Single- oder Multiturn-Abtastung einer drehbaren Welle sind in verschiedenen Ausführungen bekannt.

Die WO 02/46702 A1 offenbart einen Multiturn-Codedrehgeber, in dem mittels optischer Abtastung einer Codescheibe die Winkellage innerhalb einer Umdrehung erfasst wird, und zusätzlich mittels weiterer Codescheiben in Form von Magnetkörpern die Anzahl der Umdrehungen erfasst wird.

Weiterhin sind aus der DE 44 40 214 A1 und der EP 0 836 072 B1 Drehgeber bekannt, die sowohl die Winkelbestimmung innerhalb einer Umdrehung als auch die Umdrehungszählung durch voneinander unabhängige magnetische Abtastungen durchführen. Dabei werden mindestens zwei Magnetanordnungen benötigt.

In der EP 1 243 891 A wird ein Drehgeber mit einem Betätigungselement in Form eines Permanentmagneten beschrieben, der die Magnetfelder bereitstellt, die für die absolute Messung des Feinpositionswertes erforderlich sind, die mit Hilfe einer Vierquadranten-Hallsonde erfolgt, deren Hallelemente über Kreuz verbunden sind. Bei einer Multiturnerfassung wird mittels des Permanentmagneten ein Schaltelement angesteuert, um die vollständigen Umdrehungen der Geberwelle zu bestimmen.

Die US 2002/021124 A1 offenbart einen Sensor bspw. einen Winkelsensor für die Steuerung eines Elektromotors. Der Sensor umfasst einen Halbleiterchip mit integrierten horizontalen Halleffekt Elementen und ein einzelnes Anpassungselement.

Bei allen aus dem Stand der Technik bekannten Lösungen zur absoluten Winkelbestimmung einer Welle ist es nachteilig, dass diese nur durch die separate Anordnung einer feinauflösenden Positionsabtastung innerhalb einer Umdrehung und einer grobauflösenden Positionsabtastung zur Zählung der Umdrehungen realisiert werden. In solchen im Stand der Technik offenbarten Drehgebem sind zwei voneinander unabhängige arbeitende Abtastungen kombiniert. Das hat einen aufwändigen Aufbau mit vielen Bestandteilen und einen aufwändigen Justierungsbedarf zur Folge.

### Beschreibung der Erfindung

Angesichts der Nachteile des Stands der Technik, liegt der Erfindung das Problem zugrunde, einen Drehgeber zur Verfügung zu stellen, der einen vereinfachten Aufbau hat.

Das zuvor genannte Problem wird gelöst durch einen Drehgeber zur Bestimmung des absoluten Drehwinkels einer um eine Drehachse drehbaren Welle in Bezug auf eine Ausgangswinkellage der Welle, gemäß der Merkmale des Anspruchs 1.

Der erfindungsgemäße Drehgeber zeichnet sich dadurch aus, dass er eine erste Magnetfelddetektionseinrichtung zur Bestimmung der Anzahl der Umdrehungen der Welle in Bezug auf die Ausgangswinkellage der Welle umfasst. Dadurch kann die Anzahl der Umdrehungen, also der ganzzahlige Anteil der absoluten Winkellage ermittelt werden.

Der erfindungsgemäße Drehgeber zeichnet sich weiterhin dadurch aus, dass er eine zweite Magnetfelddetektionseinrichtung zur Bestimmung des relativen Drehwinkels der Welle in Bezug auf die Ausgangswinkellage der Welle umfasst. Dadurch kann der relative Drehwinkel, also die Winkellage innerhalb einer Umdrehung ermittelt werden.

Der erfindungsgemäße Drehgeber zeichnet sich weiterhin dadurch aus, dass er eine in Bezug auf die Welle ortsfest angeordnete Magneteinrichtung umfasst, deren Magnetfeld derart ausgebildet ist, dass in der ersten Magnetfelddetektionseinrichtung wenigstens ein Signal erzeugt wird, aus dem bzw. aus denen die Anzahl der Umdrehungen der Welle ermittelbar ist und in der zweiten Magnetfeldetektionseinrichtung wenigstens ein dem relativen Drehwinkel entsprechendes Signal erzeugt wird. Auf diese Weise können sowohl die erste als auch die zweite Magnetfelddetektionseinrichtung durch die gleiche Magneteinrichtung angesteuert werden.

Dabei kann das wenigstens eine Signal, das in der ersten Magnetfeldeinrichtung erzeugt wird, selbst ein Maß für die Anzahl der Umdrehungen darstellen, oder jedes Signal entspricht einem Bruchteil einer Umdrehung, genau einer Umdrehung oder einem ganz- oder unganzzahligem Vielfachen einer Umdrehung, indem aus diesem Signal die Anzahl der Umdrehungen ermittelt werden kann.

Wenn die mittels der ersten Magnetfelddetektionseinrichtung bestimmte Anzahl der Umdrehungen mit N bezeichnet wird und der mittels der zweiten Magnetfelddetektionseinrichtung bestimmte Drehwinkel relativ zu der Ausgangswinkellage mit ϕ bezeichnet wird, so ist der absolute Drehwinkel Φ bezüglich der Ausgangswinkellage durch Φ = N· 360° + ϕ gegeben.

Die Vorteile des erfindungsgemäßen Drehgebers liegen darin, dass zwei unabhängige Abtastungen zu einer einzigen mit Doppelfunktion kombiniert werden, indem nur durch eine Magneteinrichtung sowohl in der ersten als auch in der zweiten Magnetfelddetektionseinrichtung Signale erzeugt werden. Dadurch ist ein vereinfachter, robusterer und kostengünstigerer Aufbau als gemäß Stand der Technik möglich.

Der zuvor genannte Drehgeber kann wie im Folgenden beschrieben weitergebildet werden.

Der Drehgeber umfasst ein Trägerelement, auf dem die erste und zweite Magnetfelddetektionseinrichtung angeordnet sind. Auf diese Weise kann eine einfache und stabile relative Anordnung der ersten und zweiten Magnetfelddetektionseinrichtung erzielt werden.

Eine andere Weiterbildung besteht darin, dass auf dem Trägerelement eine Elektronikschaltung zur Auswertung der Signale der ersten und zweiten Magnetfelddetektionseinrichtung angeordnet ist, wobei die Elektronikschaltung vorzugsweise Mittel zur Bildung des absoluten Drehwinkels und/oder Mittel zur Übertragung der gewonnenen Signale an eine übergeordnete Signalverarbeitungseinheit umfasst. Dies hat den Vorteil, dass die Detektionseinrichtungen und die Auswerteelektronik kompakt zusammengefasst werden können und sich kurze Wege von der Signalaufnahme bis zur Signalverarbeitung ergeben. Weiterhin hat dies den Vorteil einer einfachen Signalverarbeitung in der übergeordneten Signalverarbeitungseinheit.

Ferner umfasst der Drehgeber wenigstens ein Anpassungselement, welches zur Anpassung des durch die Magneteinrichtung erzeugten Magnetfelds an eine jeweilige Konfiguration der Magnetfelddetektionseinrichtungen dient. Auf diese Weise kann durch Versetzen des Anpassungselements das Magnetfeld flexibel an eine bestimmte Konfiguration der Magnetfelddetektionseinrichtungen angepasst werden.

Eine andere Weiterbildung besteht darin, dass das wenigstens eine Anpassungselement das Magnetfeld der Magneteinrichtung im Bereich der ersten und/oder der zweiten Magnetfelddetektionseinrichtung lokal verstärkt. Dies hat den Vorteil, dass das Magnetfeld im Bereich der ersten und/oder zweiten Magnetfelddetektionseinrichtung verstärkt werden kann, um so eine erhöhte Empfindlichkeit und/oder Genauigkeit der Winkelbestimmung zu ermöglichen.

Eine andere Weiterbildung besteht darin, dass die zweite Magnetfelddetektionseinrichtung wenigstens einen Hall-Sensor oder/und einen magnetoresistiven Sensor umfasst. Dies hat den Vorteil, dass dadurch ein bekannter und zuverlässiger Sensor als zweite Magnetfelddetektionseinrichtung zur Bestimmung der relativen Winkellage der Welle eingesetzt werden kann. Ein Hall-Sensor liefert ein Signal, dass von der relativen Winkellage des Magnetfelds und des Hall-Sensors abhängt.

Eine andere Weiterbildung besteht darin, dass die erste Magnetfelddetektionseinrichtung wenigstens einen magnetoresistiven Sensor umfasst. Dies hat den Vorteil, dass dadurch wenigstens ein bekannter und zuverlässiger Sensor als erste Magnetfelddetektionseinrichtung zur Erzeugung von wenigstens einem Signal eingesetzt werden kann, woraus dann die Bestimmung der Anzahl der Umdrehungen der Welle erfolgen kann.

Eine andere Weiterbildung besteht darin, dass die erste Magnetfelddetektionseinrichtung wenigstens ein Reed-Relais umfasst. Die Verwendung wenigstens eine Reed-Relais ermöglicht das Erfassen von verschiedenen Schaltzuständen desselben, um aus den Schaltimpulsen als Signale die Anzahl der Umdrehungen zu ermitteln.

Eine andere Weiterbildung besteht darin, dass die zweite Magnetfelddetektionseinrichtung im Bereich der Drehachse der Welle angeordnet ist. Eine solche Anordnung hat den Vorteil, dass die Magnetfeldstärke an der zweiten Magnetfelddetektionseinrichtung im Wesentlichen konstant ist.

Eine andere Weiterbildung besteht darin, dass die erste Magnetfelddetektionseinrichtung mit einem Abstand zur Drehachse der Welle angeordnet ist. Dadurch ergeben sich außer den Richtungsänderungen des Magnetfelds während des Drehens der Welle auch noch wesentliche Amplitudenänderungen, die für das Erzeugen von Zählsignalen verwendet werden können.

Eine andere Weiterbildung besteht darin, dass die erste Magnetfelddetektionseinrichtung im Bereich der Drehachse der Welle angeordnet ist. Das hat den Vorteil, dass erste Magnetfelddetektionseinrichtungen verwendet werden können, die bei im Wesentlichen konstanter Magnetfeldstärke wenigstens ein von der Magnetfeldrichtung abhängendes Signal liefern.

Eine andere Weiterbildung besteht darin, dass die zweite Magnetfelddetektionseinrichtung mit einem Abstand zur Drehachse der Welle angeordnet ist. Dadurch ergeben sich außer den Richtungsänderungen des Magnetfelds während des Drehens der Welle auch noch wesentliche Amplitudenänderungen, die für das Erzeugen eines der relativen Winkellage der Welle entsprechenden Signals verwendet werden können.

Eine andere Weiterbildung besteht darin, dass die erste Magnetfelddetektionseinrichtung wenigstens zwei Sensoren umfasst, die in Drehrichtung zueinander versetzt, vorzugsweise um 90° versetzt, angeordnet sind. Dadurch kann die Drehrichtung der Welle bestimmt werden. Weiterhin kann dadurch eine eventuell vorhandene Unexaktheit der Schaltpunkte der Sensoren aufgefangen werden, so dass sie sich nicht auf das Ergebnis der Umdrehungszählung auswirkt.

Eine andere Weiterbildung besteht darin, dass der Drehgeber ein Gehäuse umfasst, an dessen Innenseite oder Außenseite die erste und/oder die zweite Magnetfelddetektionseinrichtung angeordnet sind. Dadurch ist es möglich, die erste und/oder die zweite Magnetfelddetektionseinrichtung geschützt, einfach und sicher in der Nähe der Welle anzuordnen. Hierbei ist es möglich, dass die Welle auch ohne direkte mechanische Verbindung zum Gehäuse angeordnet sein kann.

Eine andere Weiterbildung besteht darin, dass das Gehäuse zur wenigstens teilweisen Abschirmung von äußeren Stör-Magnetfeldern ein Material mit einer Permeabilitätszahl µ*ᵣ* >> 1 umfasst. Ein Gehäuse, das ein derartiges magnetisch leitendes Material umfasst, hat den Vorteil, dass äußere Magnetfelder, die eine Signalerzeugung in der ersten und/oder zweiten Magnetfelddetektionseinrichtung stören könnten, durch eine geeignete derartige Ausgestaltung des Gehäuses abgeschirmt werden können.

Eine andere Weiterbildung besteht darin, dass das Gehäuse eine wellenseitige Gehäuseabdeckung umfasst, die vorzugsweise Material mit einer Permeabilitätszahl µ*ᵣ* ≈ 1 umfasst. Dies hat den Vorteil, dass das Gehäuse durch die Gehäuseabdeckung verschlossen ist, um so eine darin befindliche Magnetfelddetektionseinrichtung und/oder Elektronikschaltung zu schützen.

Eine andere Weiterbildung besteht darin, dass der Drehgeber derart ausgebildet, dass das Trägerelement, auf dem die erste und zweite Magnetfelddetektionseinrichtung angeordnet sind, ohne Gehäuse in der Nähe der Welle angeordnet werden kann. Dadurch kann eine einfache und kompakte Ausbildung des Drehgebers erzielt werden. Dies bietet Vorteile im Hinblick auf Kosten und Platzbedarf des Drehgebers

Eine andere Weiterbildung besteht darin, dass die Magneteinrichtung einen Permanentmagneten umfasst. Dadurch kann ein permanentes Magnetfeld ohne elektrische Ströme erzeugt werden, so dass bei der Anordnung des Permanentmagneten an der Welle keine weiteren Verbindungen, insbesondere keine elektrischen, notwendig sind.

Die verschiedenen Weiterbildungen lassen sich unabhängig voneinander einsetzen oder geeignet miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

Fig. 1 zeigt eine erste Ausführungsform eines erfindungsgemäßen Drehgebers.
Fig. 2 zeigt eine zweite Ausführungsform eines erfindungsgemäßen Drehgebers.
Fig. 3 zeigt eine dritte Ausführungsform eines erfindungsgemäßen Drehgebers.
Fig. 4 zeigt eine vierte Ausführungsform eines erfindungsgemäßen Drehgebers.
Fig. 5 zeigt eine fünfte Ausführungsform eines erfindungsgemäßen Drehgebers.

### Beschreibung der Ausführungsformen

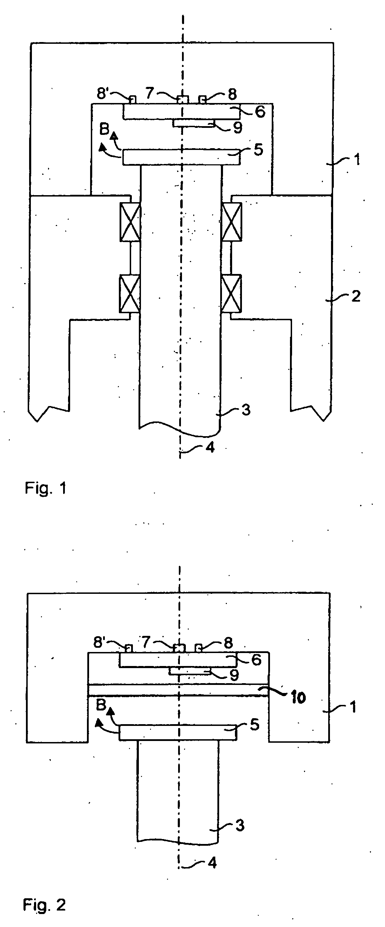

Fig. 1 zeigt eine erste Ausführungsform eines erfindungsgemäßen Drehgebers mit den folgenden Bestandteilen: eine erste Magnetfelddetektionseinrichtung 8, 8', eine zweite Magnetfelddetektionseinrichtung 7, eine Magneteinrichtung 5, ein Trägerelement 6, ein Anpassungselement 9 und ein Gehäuse 1. Vorzugsweise kann das Trägerelement 6 auch eine Elektronikschaltung zur Auswertung der Signale der ersten und zweiten Magnetfelddetektionseinrichtung umfassen.

Es ist eine Welle 3 dargestellt, die in einem Lagersitz 2 um eine Drehachse 4 drehbar gelagert ist und deren absolute Winkellage bestimmt werden soll. Das Gehäuse 1 ist in dieser Ausführungsform mit dem Lagersitz 2 verbunden. Die Magneteinrichtung 5 ist in Bezug auf die Welle 3 ortsfest angeordnet, nämlich direkt an der Abschlussfläche der Welle 3. Die Magneteinrichtung 5 ist hier als ein Permanentmagnet ausgebildet und erzeugt ein dreidimensionales magnetisches Feld B.

Die räumliche Verteilung des Magnetfelds B wird von magnetisch leitenden Teilen in seiner Umgebung, wie etwa von ferromagnetischen Teilen des Gehäuses 1, von magnetischen Bauteilen auf dem Trägerelement 6 und von dem Anpassungselement 9 beeinflusst. Für die Funktion des Drehgebers ist eine genaue Abstimmung aller magnetischen Teile im gesamten Umfeld notwendig. Dazu können Versuchsreihen zur Abstimmung durchgeführt werden, wobei dann z.B: das Anpassungselement 9 versetzt wird, um für eine gegebene Konfiguration den Magnetfeldverlauf im Bereich der ersten und der zweiten Magnetfelddetektionseinrichtung anzupassen. Dadurch kann das magnetische Feld auf Unempfindlichkeit gegenüber Fertigungstoleranzen und Temperatureinflüssen, sowie auf den Arbeitsbereich der Magnetfeldsensoren 7, 8, 8' optimiert werden.

Im Betriebszustand wird die absolute Winkellage der Welle 3 durch die Winkellage des Permanentmagneten 5 bestimmt, indem mit der zweiten Magnetfelddetektionseinrichtung 7, die sich auf der Drehachse befindet, im Wesentlichen nur eine unterschiedliche Feldrichtung detektiert wird, wobei die Stärke des Feldes B im Wesentlichen konstant bleibt. Es wird ein Signal ausgegeben, das von dieser Feldrichtung abhängt, wodurch die relative Winkellage in Bezug auf eine Ausgangswinkellage ermittelt werden kann. Weiterhin führen verschieden magnetische Feldstärken im Bereich der ersten Magnetfelddetektionseinrichtung 8, 8' dazu, dass wenigsten ein Signal, z.B. Zählimpulse, an die Auswerteelektronik übermittelt werden, um daraus die Anzahl der ganzen Umdrehungen zu ermitteln.

Indem die relative Winkellage und die Anzahl der ganzen Umdrehungen bestimmt wird, ist somit auch die absolute Winkellage bestimmt.

Fig. 2 zeigt eine zweite Ausführungsform der Erfindung. Zur Vermeidung von Wiederholungen wird im Folgenden nur auf die Unterschiede zur vorherigen Ausführungsform eingegangen und im Übrigen auf die Beschreibung von Fig. 1 verwiesen. Sich entsprechende Teile sind in den Zeichnungen mit gleichen Bezugszeichen versehen. Im Gegensatz zu Fig. 1 befindet sich die Welle 3 hier nicht in einem Lagersitz, sondern hat ein freies Ende. Deshalb ist hier insbesondere auch das Gehäuse 1 nicht an einem solchen Lagersitz befestigt. Dafür hat das zylindrische, im Querschnitt U-förmige Gehäuse 1 eine Gehäuseabdeckung 10, die so angeordnet ist, dass der auf der Welle 3 befindliche Permanentmagnet 5 nahe an die Gehäuseabdeckung 10 heranreicht und gleichzeitig innerhalb des zylindrischen Teils des Gehäuses angeordnet ist. Dadurch kann das magnetische Feld B durch das Gehäuse gut beeinflusst werden.

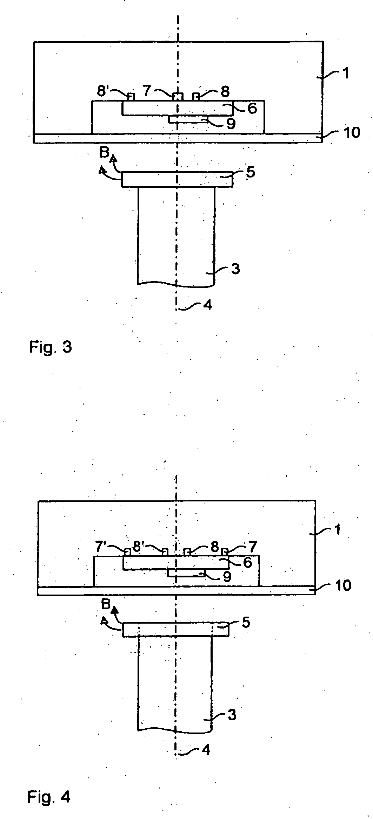

Fig. 3 zeigt eine dritte Ausführungsform der Erfindung. Zur Vermeidung von Wiederholungen wird im Folgenden nur auf die Unterschiede zu den vorherigen Ausführungsformen eingegangen und im Übrigen auf die Beschreibungen von Fig. 1 und 2 verwiesen. Sich entsprechende Teile sind in Fig. 3 mit gleichen Bezugszeichen versehen. Der erfindungsgemäße Drehgeber umfasst im Vergleich zu Fig. 2 in dieser Ausführungsform eine größere Gehäuseabdeckung 10, die den gesamten zylindrischen Bereich de Gehäuses 1 abdeckt. Hier ragt der Permanentmagnet nicht in den zylindrischen Teil des Gehäuses.

Fig. 4 zeigt eine vierte Ausführungsform der Erfindung. Zur Vermeidung von Wiederholungen wird im Folgenden nur auf die Unterschiede zu den vorherigen Ausführungsformen eingegangen und im Übrigen auf die Beschreibungen von Fig. 1, 2 und 3 verwiesen. Sich entsprechende Teile sind in Fig. 4 mit gleichen Bezugszeichen versehen. Der erfindungsgemäße Drehgeber umfasst im Vergleich zu Fig. 3 in dieser Ausführungsform eine zweite Magnetfelddetektionseinrichtung 7, 7', die aus zwei von der Drehachse 4 entfernten Sensoren 7, 7' besteht. In dieser Ausführungsform hängt das Signal der Sensoren 7, 7' nicht nur von der Richtung sondern auch vom Betrag der Magnetfeldstärke ab, der sich bei der Drehung der Welle 3 am Ort der Sensoren 7, 7' ändert.

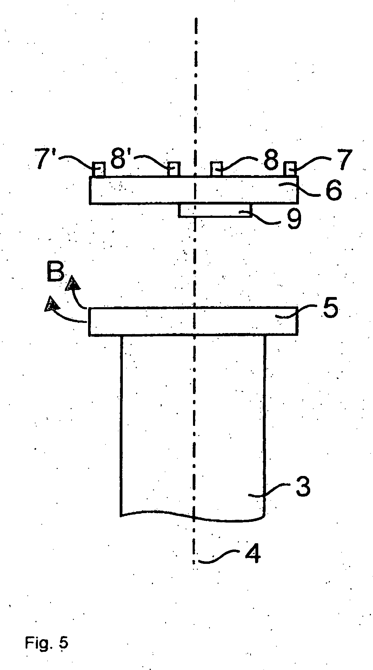

Fig. 5 zeigt eine fünfte Ausführungsform der Erfindung. Zur Vermeidung von Wiederholungen wird im Folgenden nur auf die Unterschiede zu den vorherigen Ausführungsformen eingegangen und im Übrigen auf die Beschreibungen von Fig. 1, 2, 3 und 4 verwiesen. Diese Ausführungsform unterscheidet sich von der in Fig. 4 dargestellten dadurch, dass kein Gehäuse und keine Gehäuseabdeckung vorhanden ist. Der Drehgeber kann dann insgesamt kompakt ausgeführt werden. Eine solche Ausführung ist aber auch dann sinnvoll einzusetzen, wenn der Drehgeber in eine andere Vorrichtung integriert werden soll. Eine solche andere Vorrichtung kann z.B. diejenige Maschine sein, welche die Welle 3 umfasst, deren Winkellage bestimmt werden soll.

## Patentansprüche

1. Drehgeber zur Bestimmung des absoluten Drehwinkels einer um eine Drehachse (4) drehbaren Welle (3) in Bezug auf eine Ausgangswinkellage der Welle (3), umfassend ein Gehäuse (1),
eine erste Magnetfelddetektionseinrichtung (8, 8') zur Bestimmung der Anzahl der Umdrehungen der Welle (3) in Bezug auf die Ausgangswinkellage der Welle (3),
eine zweite Magnetfelddetektionseinrichtung (7, 7') zur Bestimmung des relativen Drehwinkels der Welle (3) in Bezug auf die Ausgangswinkellage der Welle (3),
eine in Bezug auf die Welle (3) ortsfest angeordnete Magneteinrichtung (5), deren Magnetfeld derart ausgebildet ist, dass in der ersten Magnetfelddetektionseinrichtung (8, 8') wenigstens ein Signal erzeugt wird, aus dem die Anzahl der. Umdrehungen der Welle (3) ermittelbar ist und in der zweiten Magnetfelddetektionseinrichtung (7, 7') wenigstens ein dem relativen Drehwinkel entsprechendes Signal erzeugt wird, **dadurch gekennzeichnet, dass**
wenigstens ein Anpassungselement (9) aus ferromagnetischem Material und ein Trägerelement (6) vorgesehen sind, wobei an dem Trägerelement (6) die erste und zweite Magnetfelddetektionseinrichtung (8, 8', 7, 7') als auch das wenigstens eine Anpassungselement (9) angeordnet sind, wobei das wenigstens eine Anpassungselement (9) ausgeführt ist, für eine gegebene Konfiguration der Magnetfelddetektionseinrichtungen (8, 8', 7, 7') den Magnetfeldverlauf im Bereich der ersten (8, 8') und der zweiten Magnetfelddetektionseinrichtung (7, 7') anzupassen.

2. Drehgeber nach Anspruch 1, **dadurch gekennzeichnet, dass** das wenigstens eine Anpassungselement gegenüber der ersten und zweiten Magnetfelddetektionseinrichtung versetzbar anordenbar ist, so dass eine flexible Anpassung an eine bestimmte Konfiguration der Magnetfelddetektionseinrichtungen herstellbar ist.

3. Drehgeber nach einem der vorhergehenden Ansprüche, **dadurch gekennzeichnet, dass** auf dem Trägerelement (6) eine Elektronikschaltung zur Auswertung der Signale der ersten und zweiten Magnetfelddetektionseinrichtung (8, 8', 7, 7') angeordnet ist, wobei die Elektronikschaltung vorzugsweise Mittel zur Bildung des absoluten Drehwinkels und/oder Mittel zur Übertragung der gewonnenen Signale an eine übergeordnete Signalverarbeitungseinheit umfasst.

4. Drehgeber nach einem der vorhergehenden Ansprüche, **dadurch gekennzeichnet, dass** das wenigstens eine Anpassungselement (9) das Magnetfeld der Magneteinrichtung (5) im Bereich der ersten und/oder der zweiten Magnetfelddetektionseinrichtung (8, 8', 7, 7') lokal verstärkt.

5. Drehgeber nach einem der vorhergehenden Ansprüche, **dadurch gekennzeichnet, dass** die zweite Magnetfelddetektionseinrichtung (7, 7') wenigstens einen Hall-Sensor oder/und einen magnetoresistiven Sensor umfasst.

6. Drehgeber nach einem der vorhergehenden Ansprüche, **dadurch gekennzeichnet, dass** die erste Magnetfelddetektionseinrichtung (8, 8') wenigstens einen magnetoresistiven Sensor umfasst.

7. Drehgeber nach einem der vorhergehenden Ansprüche, **dadurch gekennzeichnet dass** die erste Magnetfelddetektionseinrichtung (8, 8') wenigstens ein Reed-Relais umfasst.

8. Drehgeber nach einem der vorhergehenden Ansprüche, **dadurch gekennzeichnet, dass** die zweite Magnetfelddetektionseinrichtung (7, 7') im Bereich der Drehachse der Welle angeordnet ist.

9. Drehgeber nach einem der vorhergehenden Ansprüche, **dadurch gekennzeichnet, dass** die erste Magnetfelddetektionseinrichtung (8, 8') mit einem Abstand zur Drehachse (4) der Welle (3) angeordnet ist.

10. Drehgeber nach einem der Ansprüche 1 bis 7, **dadurch gekennzeichnet, dass** die erste Magnetfelddetektionseinrichtung (8, 8') im Bereich der Drehachse (4) der Welle (3) angeordnet ist.

11. Drehgeber nach einem der Ansprüche 1 bis 7, oder 10, **dadurch gekennzeichnet, dass** die zweite Magnetfelddetektionseinrichtung (7, 7') mit einem Abstand zur Drehachse (4) der Welle (3) angeordnet ist.

12. Drehgeber einem der vorhergehenden Ansprüche, **dadurch gekennzeichnet, dass** ein Gehäuse (1) zur wenigstens teilweisen Abschirmung von äußeren Stör-Magnetfeldern ein Material mit einer Permeabilitätszahl µ*ᵣ* >> 1 umfasst.

13. Drehgeber nach Anspruch 12, **dadurch gekennzeichnet, dass** eine wellenseitige Gehäuseabdeckung (10) vorgesehen ist, die vorzugsweise Material mit einer Permeabilitätszahl µ*ᵣ* ≈ 1 umfasst.

14. Drehgeber nach einem der vorhergehenden Ansprüche, **dadurch gekennzeichnet, dass** das Trägerelement (6), auf dem die erste und zweite Magnetfelddetektionseinrichtung (8, 8', 7, 7') angeordnet sind, ohne Gehäuse in der Nähe der Welle angeordnet werden kann.

15. Drehgeber nach einem der vorhergehenden Ansprüche, **dadurch gekennzeichnet, dass** die Magneteinrichtung (5) einen Permanentmagneten umfasst.

## Claims

1. Encoder for determining the absolute angle of rotation of a shaft (3) rotatable about an axis of rotation (4) in relation to an initial angle of the shaft (3), comprising a housing (1),
a first magnetic field detection device (8, 8') for determining the number of rotations of the shaft (3) in relation to the initial angle of the shaft (3),
a second magnetic field detection device (7, 7') for determining the relative angle of rotation of the shaft (3) in relation to the initial angle of the shaft (3),
a magnetic device (5) immovably located in relation to the shaft (3), the magnetic field of said device being such that in the first magnetic field detection device (8, 8') at least one signal is generated from which the number of rotations of the shaft (3) can be determined, and in the second magnetic field detection device (7, 7') at least one signal is generated corresponding to the relative angle of rotation,
**characterized in that**
at least one adjusting element (9) made of ferromagnetic material and one carrier element (6) are provided for, whereby the first and second magnetic field detection devices (8, 8', 7, 7') as well as the at least one adjusting element (9) are located on the carrier element (6), whereby the at least one adjusting element (9) is designed to adjust the magnetic field distribution in the region of the first (8, 8') and of the second magnetic field detection device (7, 7') for a given configuration of the magnetic field detection devices (8, 8', 7, 7').

2. Encoder in accordance with Claim 1, **characterized in that** the at least one adjusting element can be moved in relation to the first and second magnetic field detection devices, so that flexible adjustment can be achieved for a certain configuration of the magnetic field detection devices.

3. Encoder in accordance with one of the above Claims, **characterized in that** an electronic circuit for evaluating the signals of the first and second magnetic field detection devices (8, 8', 7, 7') is located on the carrier element (6), whereby the electronic circuit preferably comprises means to form the absolute angle of rotation and/or means to transmit the signals thus obtained to a higher-order signal processing unit.

4. Encoder in accordance with one of the above Claims, **characterized in that** the at least one adjusting element (9) locally amplifies the magnetic field of the magnetic device (5) in the region of the first and/or of the second magnetic field detection device (8, 8', 7, 7').

5. Encoder in accordance with one of the above Claims, **characterized in that** the second magnetic field detection device (7, 7') comprises at least one Hall sensor or/and one magneto-resistive sensor.

6. Encoder in accordance with one of the above Claims, **characterized in that** the first magnetic field detection device (8, 8') comprises at least one magneto-resistive sensor.

7. Encoder in accordance with one of the above Claims, **characterized in that** the first magnetic field detection device (8, 8') comprises at least one reed relay.

8. Encoder in accordance with one of the above Claims, **characterized in that** the second magnetic field detection device (7, 7') is located in the region of the axis of rotation of the shaft.

9. Encoder in accordance with one of the above Claims, **characterized in that** the first magnetic field detection device (8, 8') is located at a distance to the axis of rotation (4) of the shaft (3).

10. Encoder in accordance with one of the Claims 1 to 7, **characterized in that** the first magnetic field detection device (8, 8') is located in the region of the axis of rotation (4) of the shaft (3).

11. Encoder in accordance with one of the Claims 1 to 7, or 10, **characterized in that** the second magnetic field detection device (7, 7') is located at a distance to the axis of rotation (4) of the shaft (3).

12. Encoder in accordance with one of the above Claims, **characterized in that** a housing (1) for the at least partial shielding against external magnetic field interference comprises a material with a permeability coefficient of µ*ᵣ >>* 1.

13. Encoder in accordance with Claim 12, **characterized in that** a housing cover (10) is provided on the shaft side, preferably comprising material with a permeability coefficient of µ*ᵣ* ≈ 1 .

14. Encoder in accordance with one of the above Claims, **characterized in that** the carrier element (6) on which the first and second magnetic field detection devices (8, 8', 7, 7') are located, can be located without a housing in the vicinity of the shaft.

15. Encoder in accordance with one of the above Claims, **characterized in that** the magnetic device (5) comprises a permanent magnet.

## Revendications

1. Codeur permettant de déterminer l'angle de rotation absolu d'un arbre rotatif (3) autour d'un axe de rotation (4) par rapport à une orientation angulaire de sortie de l'arbre (3), comprenant
un boîtier (1),
un premier dispositif de détection de champ magnétique (8, 8') permettant de déterminer le nombre de tours de l'arbre (3) par rapport à l'orientation angulaire de sortie de l'arbre (3),
un second dispositif de détection de champ magnétique (7, 7') permettant de déterminer l'angle de rotation relatif de l'arbre (3) par rapport à l'orientation angulaire de sortie de l'arbre (3),
un dispositif magnétique (5) disposé de manière fixe par rapport à l'arbre (3), dont le champ magnétique est conçu de telle sorte que dans le premier dispositif de détection de champ magnétique (8, 8') au moins un signal est généré, à partir duquel il est possible de déterminer le nombre de tours de l'arbre (3) et dans le second dispositif de détection de champ magnétique (7, 7') au moins un signal correspondant à l'angle de rotation relatif est généré,
**caractérisé en ce que**
au moins un élément d'adaptation (9) fabriqué dans un matériau ferromagnétique et un élément porteur (6) sont prévus, les premier et second dispositifs de détection de champ magnétique (8, 8', 7, 7') ainsi que le au moins un élément d'adaptation (9) étant disposés sur l'élément porteur (6), le au moins un élément d'adaptation (9) étant conçu pour s'adapter au parcours du champ magnétique dans la région des premier (8, 8') et second (7, 7') dispositifs de détection de champ magnétique pour une configuration donnée des dispositifs de détection de champ magnétique (8, 8', 7, 7').

2. Codeur selon la revendication 1, **caractérisé en ce que** le au moins un élément d'adaptation peut être disposé de manière déplaçable par rapport aux premier et second dispositifs de détection de champ magnétique, de sorte qu'une adaptation flexible à une certaine configuration des dispositifs de détection de champ magnétique peut être réalisée.

3. Codeur selon l'une des revendications précédentes, **caractérisé en ce qu'**un circuit électronique permettant d'évaluer les signaux des premier et second dispositifs de détection de champ magnétique (8, 8', 7, 7') est disposé sur l'élément porteur (6), le circuit électronique comprenant de préférence des moyens de formation de l'angle de rotation absolu et/ou des moyens de transmission des signaux produits à une unité de traitement des signaux de niveau supérieur.

4. Codeur selon l'une des revendications précédentes, **caractérisé en ce que** le au moins un élément d'adaptation (9) renforce localement le champ magnétique du dispositif magnétique (5) dans la région du premier et/ou du second dispositif de détection de champ magnétique (8, 8', 7, 7').

5. Codeur selon l'une des revendications précédentes, **caractérisé en ce que** le second dispositif de détection de champ magnétique (7, 7') comprend au moins un détecteur Hall et/ou un détecteur magnétorésistif.

6. Codeur selon l'une des revendications précédentes, **caractérisé en ce que** le premier dispositif de détection de champ magnétique (8, 8') comprend au moins un détecteur magnétorésistif.

7. Codeur selon l'une des revendications précédentes, **caractérisé en ce que** le premier dispositif de détection de champ magnétique (8, 8') comprend au moins un relais à lames souples.

8. Codeur selon l'une des revendications précédentes, **caractérisé en ce que** le second dispositif de détection de champ magnétique (7, 7') est disposé dans la région de l'axe de rotation de l'arbre.

9. Codeur selon l'une des revendications précédentes, **caractérisé en ce que** le premier dispositif de détection de champ magnétique (8, 8') est disposé à une distance par rapport à l'axe de rotation (4) de l'arbre (3).

10. Codeur selon l'une des revendications 1 à 7, **caractérisé en ce que** le premier dispositif de détection de champ magnétique (8, 8') est disposé dans la région de l'axe de rotation (4) de l'arbre (3).

11. Codeur selon l'une des revendications 1 à 7, ou 10, **caractérisé en ce que** le second dispositif de détection de champ magnétique (7, 7') est disposé à une distance par rapport à l'axe de rotation (4) de l'arbre (3).

12. Codeur selon l'une des revendications précédentes, **caractérisé en ce qu'**un boîtier (1) comprend un matériau présentant une perméabilité relative µ*ᵣ* >> 1 pour le blindage au moins partiel des perturbations magnétiques extérieures.

13. Codeur selon la revendication 12, **caractérisé en ce qu'**un capot de boîtier (10) côté arbre est prévu, lequel comprend de préférence un matériau présentant une perméabilité relative µ*ᵣ* ≈ 1.

14. Codeur selon l'une des revendications précédentes, **caractérisé en ce que** l'élément porteur (6), sur lequel sont disposés les premier et second dispositifs de détection de champ magnétique (8, 8', 7, 7'), ne peut être disposé sans boîtier à proximité de l'arbre.

15. Codeur selon l'une des revendications précédentes, **caractérisé en ce que** le dispositif magnétique (5) comprend un aimant permanent.
